# EUROPÄISCHE PATENTSCHRIFT

(11) **EP 2 012 303 B1**
(45) Veröffentlichungstag und Bekanntmachung des Hinweises auf die Patenterteilung: **07.01.2015**
(21) Anmeldenummer: 08104398.6
(22) Anmeldetag: 13.06.2008
(51) Int. Cl.: G10L 15/02, G10L 15/14, G10L 15/28

(54) **Verfahren zur Erkennung eines Sprachsignals**
Method for detecting a speech signal
Procédé de reconnaissance d'un signal vocal

(30) Priorität: 03.07.2007 DE 102007030777
(43) Veröffentlichungstag der Anmeldung: 07.01.2009
(73) Patentinhaber: Svox AG, 8048 Zürich (CH)
(72) Erfinder: Wandinger, Michael, 85540 Salmdorf (DE)
(74) Vertreter: PATWIL AG

(56) Entgegenhaltungen:
- US-A- 5 136 654
- MURVEIT H ET AL: "Large-vocabulary dictation using SRI's DECIPHER speech recognition system: progressive search techniques" PLENARY, SPECIAL, AUDIO, UNDERWATER ACOUSTICS, VLSI, NEURAL NETWORKS. MINNEAPOLIS, APR. 27 - 30, 1993; [PROCEEDINGS OF THE INTERNATIONAL CONFERENCE ON ACOUSTICS, SPEECH, AND SIGNAL PROCESSING (ICASSP)], NEW YORK, IEEE, US, Bd. 2, 27. April 1993 (1993-04-27), Seiten 319-322, XP010110458 ISBN: 978-0-7803-0946-3
- ALLEVA F ET AL: "An improved search algorithm using incremental knowledge for continuous speech recognition" PLENARY, SPECIAL, AUDIO, UNDERWATER ACOUSTICS, VLSI, NEURAL NETWORKS. MINNEAPOLIS, APR. 27 - 30, 1993; [PROCEEDINGS OF THE INTERNATIONAL CONFERENCE ON ACOUSTICS, SPEECH, AND SIGNAL PROCESSING (ICASSP)], NEW YORK, IEEE, US, Bd. 2, 27. April 1993 (1993-04-27), Seiten 307-310, XP010110455 ISBN: 978-0-7803-0946-3
- YOSHIHARU ABE ET AL: "A TWO-STAGE SPEECH RECOGNITION METHOD WITH AN ERROR CORRECTION MODEL" 6TH EUROPEAN CONFERENCE ON SPEECH COMMUNICATION AND TECHNOLOGY. EUROSPEECH '99, Bd. 1, 5. September 1999 (1999-09-05), Seiten 443-446, XP007001010 BUDAPEST, HUNGARY

## Beschreibung

Die vorliegende Erfindung betrifft ein Verfahren und eine Datenverarbeitungsvorrichtung zur Erkennung eines Sprachsignals, insbesondere in Umgebungen mit geringem verfügbaren Speicherplatz und niedriger Rechenleistungskapazität.

Die Spracherkennungstechnologie findet immer breitere Anwendungsfelder. Im Bereich der mobilen Endgeräte, speziell im Smartphonesektor, gehört die Kommandoerkennung und die Sprachwahl bereits zum Standardfunktionsempfang. In den Kraftfahrzeugen der Oberklasse ist die Spracherkennung ebenfalls bereits obligatorisch. Durch den Einsatz von Spracherkennungssystemen mit reduziertem Funktionsumfang in der Mittelklasse oder über die komplette Modellpalette eines Herstellers hinweg wird sich die Spracherkennung im Automobilsektor weiter verbreiten.

Insbesondere in Navigationssystemen ist der Einsatz einer Spracherkennung mit Vorteilen verbunden, aufgrund der komplizierten manuellen Eingabe von Navigationszielen. Durch ein kleines Tastaturfeld und vergleichsweise kleine Displays gestaltet sich die Eingabe von Navigationszielen meist recht umständlich und nimmt infolgedessen eine gewisse Zeit in Anspruch. Durch eine Spracheingabe kann dieses Vorgehen deutlich beschleunigt und vereinfacht werden.

Auch die sprachgesteuerte Auswahl von MP3-Titeln wird sich in Zukunft in Infotainmentsystemen weiter durchsetzen. Beide Anwendungsszenarien haben gemeinsam, dass es sich um die Erkennung großer Wortschätze handelt. In Deutschland gibt es ca. 70.000 Städtenamen und in etwa 370.000 Straßennamen. Die Anzahl der MP3-Titel wird im Moment nur noch durch die Größe des vorhandenen Speichers begrenzt. Ein Speicherplatz von beispielsweise 80 Gigabyte verfügt über eine Kapazität von in etwa 10.000 MP3-Titeln.

Somit müssen Spracherkennungssysteme in einer Fahrzeugumgebung oder bei Embedded-Geräten Vorgaben einerseits hinsichtlich des vorhandenen Speichers und andererseits hinsichtlich der zur Verfügung stehenden Rechenleistung einhalten. Im Gegensatz zu Computern, bei denen sowohl Speicherplatz als auch Rechenkapazität beinahe unbegrenzt zur Verfügung stehen, spielen die Kosten für zusätzlichen Speicher und höher getaktete Prozessoren für diese Anwendungen eine entscheidende Rolle.

Davon ausgehend liegt der Erfindung die Aufgabe zugrunde, ein Verfahren anzugeben, welches eine Spracherkennung mit großen Vokabularien auf Systemen mit geringen Speicherplatz- und Rechenleistungskapazitäten ermöglicht.

Diese Aufgabe wird durch ein Verfahren und eine Datenverarbeitungsvorrichtung gemäß den Ansprüchen 1 und 9 gelöst. Vorteilhafte Weiterbildungen der Erfindung sind in den Unteransprüchen 2 bis 8 angegeben.

Erfindungsgemäß werden in einem Verfahren zur Erkennung eines Sprachsignals in einem ersten Erkennungsschritt aus einem vorgebbaren Vokabular ähnliche Vokabulareinträge zu dem Sprachsignal ermittelt. In einem zweiten Erkennungsschritt wird aus den ähnlichen Vokabulareinträgen das Sprachsignal ermittelt, wie dem Fachmann unter anderem auch aus dem US Patent 5136654, W.F. Ganong et al., 04.08.1992 bekannt ist. Erfindungsgemäß wird hier nun im ersten und/oder zweiten Erkennungsschritt eine Abtastung von ermittelten Sprachsignalinformationen reduziert. Zudem oder stattdessen werden auch die Zustandsfolgen von Einträgen des vorgebbaren Vokabulars reduziert. In vorteilhafter Weise wird somit in einem ersten Erkennungsschritt eine N-Best-Liste aus dem Vokabular ermittelt und anschließend in einem zweiten Erkennungsschritt auf Grundlage der N-Best-Liste die gesprochene Eingabe erkannt. Eine Reduzierung des Speicherplatz- und Rechenzeitbedarfs wird zudem über eine Reduzierung der ermittelten Sprachsignalinformationen und/oder des Vokabulars erzielt.

Gemäß einer Ausgestaltung der vorliegenden Erfindung werden zur Ermittlung von ähnlichen Vokabulareinträgen beziehungsweise des Sprachsignals im ersten und zweiten Erkennungsschritt durch eine Abtastung aus einem Zeitsignal des Sprachsignals Abtastwerte ermittelt. Durch eine Merkmalsextraktion aus den Abtastwerten werden Merkmalsvektoren ermittelt. Auf Grundlage einer Abstandsberechnung von Merkmalsvektoren und Referenzvektoren werden Emissionsvektoren ermittelt. Die ermittelten Sprachsignalinformationen umfassen die Abtastwerte und/oder die Merkmalsvektoren und/oder die Emissionsvektoren.

Gemäß einer weiteren Ausgestaltung der vorliegenden Erfindung werden zur Reduzierung der Abtastung der ermittelten Sprachsignalinformationen einzelne Abtastwerte und/oder Merkmalsvektoren und/oder Emissionsvektoren jeweils zusammengefasst oder ausgelassen. In vorteilhafter Weise wird somit in diesem statischen Verfahren zur Reduzierung beispielsweise nur jeder dritte Merkmalsvektor für die Spracherkennung herangezogen oder aus drei Merkmalsvektoren ein gemittelter Merkmalsvektor für die Spracherkennung ermittelt.

Gemäß einer weiteren Ausgestaltung der vorliegenden Erfindung werden zur Reduzierung der Abtastung der ermittelten Sprachsignalinformationen ein Abtastwert und/oder Merkmalsvektor und/oder Emissionsvektor nur herangezogen, wenn ein vorgebbarer Abstand zu einem Vorgängerwert/-Vektor ermittelt wird. In diesem vorteilhaften dynamischen Verfahren zur Reduzierung der Abtastung wird ein Merkmalsvektor beispielsweise nur dann für die Spracherkennung eingesetzt, wenn er sich von einem Vorgänger-Merkmalsvektor um einen vorgebbaren Abstand unterscheidet.

Gemäß einer weiteren Ausgestaltung der vorliegenden Erfindung wird zur Reduzierung einer Anzahl der Abtastwerte eine Abtastfrequenz verkleinert. Auf diese Weise wird die Anzahl der für die Spracherkennung herangezogenen Abtastwerte verringert, wodurch sowohl der Speicherplatz- als auch der Rechenleistungsbedarf verkleinert wird.

Gemäß einer weiteren Ausgestaltung der vorliegenden Erfindung werden zur Reduzierung der Zustandsfolgen von Einträgen des vorgebbaren Vokabulars einzelne Phonemsegmente aus einer Phonemsequenz zusammengefasst oder ausgelassen. In vorteilhafter Weise besteht beispielsweise die Möglichkeit bei einer kontextabhängigen Modellierung von Vokabulareinträgen durch Triphone, jeweils nur das Mittelsegment der Triphone, den sogenannten Kernlaut, zu verwenden.

Gemäß einer weiteren Ausgestaltung der vorliegenden Erfindung werden zur Reduzierung der Zustandsfolgen von Einträgen des vorgebbaren Vokabulars einzelne Zustandsübergänge aus einem Hidden-Markov-Modell zusammengefasst oder ausgelassen. Somit wird in vorteilhafter Weise beispielsweise durch die Zusammenfassung ähnlicher Zustandsübergänge die Größe des Hidden-Markov-Modells und somit des benötigten Speicherplatzes verringert.

Die erfindungsgemäße Datenverarbeitungsvorrichtung weist eine Spracherkennungseinheit auf, welche zur Erkennung eines Sprachsignals in einem ersten Erkennungsschritt aus einem vorgebbaren Vokabular ähnliche Vokabulareinträge zu dem Sprachsignal ermittelt. In einem zweiten Schritt ermittelt diese aus den ähnlichen Vokabulareinträgen das Sprachsignalen. Hierbei wird im ersten und/oder zweiten Erkennungsschritt eine Abtastung von ermittelten Sprachsignalinformationen reduziert. Zudem oder stattdessen werden Zustandsfolgen von Einträgen des vorgebbaren Vokabulars reduziert.

Die vorliegende Erfindung wird nachfolgend an Ausführungsbeispielen anhand der Zeichnungen näher erläutert.

### Es zeigen

- Figur 1: in einer schematischen Darstellung einen Verfahrensablauf zur Erkennung eines Sprachsignals,
- Figur 2: in einer schematischen Darstellung eine reduzierte Abtastung von Merkmalsvektoren,
- Figur 3: in einer schematischen Darstellung eine reduzierte Abtastung von Emissionsvektoren,
- Figur 4: in einer schematischen Darstellung eine reduzierte Abtastung von Emissionsvektoren durch Mittelwertbildung.

Spracherkenner basieren üblicherweise auf Hidden-Markov-Modellen. Diese bieten die Möglichkeit, eine sprecherunabhängige Spracherkennung zu realisieren. Dazu werden Hidden-Markov-Modelle auf die Phoneme (Lauteinheiten) einer Sprache trainiert. Typischerweise werden dazu sehr große, in der Zielumgebung aufgenommene Datenbanken verwendet. In den heute verwendeten Spracherkennern werden die Phoneme kontextabhängig, meist als so genannte Triphone, modelliert. Bei diesem Verfahren wird das Phonem abhängig von dem Vorgänger- und Nachfolgerphonem unterschiedlich modelliert. Zur dynamischen Generierung von Erkennervokabular werden die Phonemsequenzen der Worte angegeben und diese in eine für den Spracherkenner verständliche Form einer Zustandsfolge umgewandelt. Die Vokabulare können beispielsweise durch Verwendung eines Graphem-zu-Phonem-Konverters erzeugt werden. Hierzu wird von der geschriebenen Form in Graphemen auf die Phoneme geschlossen. Dies ermöglicht beispielsweise auch eine sprecherunabhängige Namenswahl, bei der automatisch auf dem Endgerät alle Adressbucheinträge in das Erkennervokabular aufgenommen werden.

Zur Spracherkennung wird das Sprachsignal üblicherweise zunächst abgetastet und somit digitalisiert. In einem nächsten Schritt werden aus dem digitalisierten Sprachsignal Merkmalsvektoren extrahiert, welche die für die Spracherkennung relevanten Informationen aus dem Sprachsignal enthalten. Hiernach werden die ermittelten Merkmalsvektoren mit den in dem Hidden-Markov-Modellen gespeicherten Referenzvektoren verglichen und die Abstände zu den Referenzvektoren im Hidden-Markov-Modell ermittelt. Auf Grundlage dessen erhält man im Ergebnis die sogenannten Emissionsvektoren. In einem letzten Schritt wird die Suche durchgeführt, die die Emissionsvektoren, das Vokabular mit den Zustandsfolgen und eine Grammatik oder ein Sprachmodell verwendet, um das Erkennungsergebnis zu ermitteln. Bei größeren Vokabularen wird hierbei meist eine Baumsuche verwendet, um die Komplexität gegenüber einer linearen Suche zu verringern.

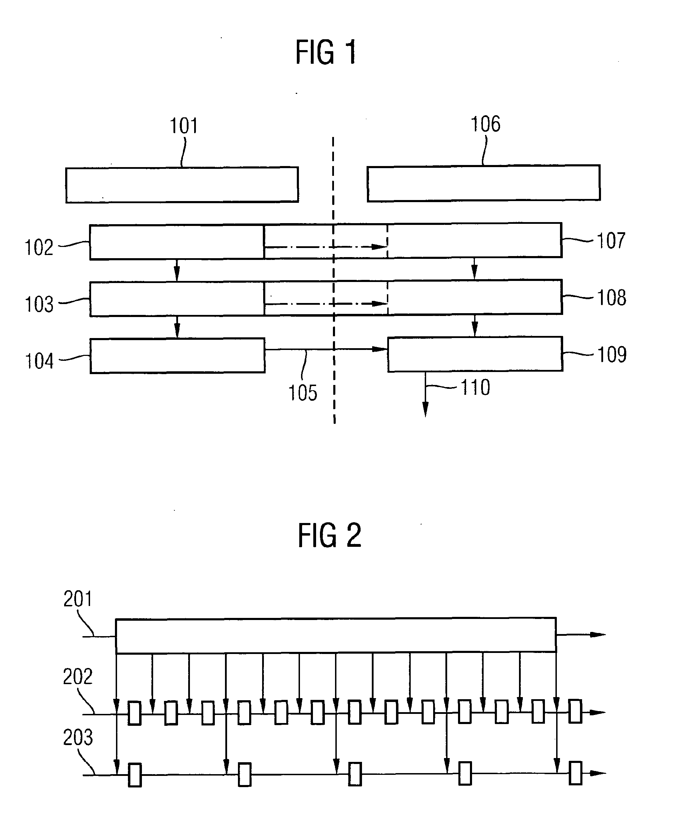

Figur 1 zeigt einen erfindungsgemäßen Ablauf eines Verfahrens zur Spracherkennung. In einem ersten Erkennungslauf 101 werden zunächst aus dem Sprachsignal die Merkmalsvektoren extrahiert 102. Auf Grundlage der extrahierten Merkmalsvektoren werden die Emissionsvektoren ermittelt 103. Schließlich wird auf Grundlage der ermittelten Emissionsvektoren 103 und des Erkennervokabulars eine N-Best-Liste 104 von Vokabulareinträgen ermittelt, welche dem Sprachsignal am ähnlichsten sind.

In einem zweiten Erkennungslauf 106 werden aus dem Sprachsignal wiederum Merkmalsvektoren extrahiert 107. Aus den extrahierten Merkmalsvektoren 107 werden im folgenden Schritt die Emissionsvektoren ermittelt 108. Sowohl bei der Ermittlung der Merkmalsvektoren als auch bei der Ermittlung der Emissionsvektoren können hierbei die entsprechenden Ergebnisse aus dem ersten Erkennungslauf 101 verwendet werden. Die abschließende Suche 109 basiert nun auf der N-Best-Liste 105 aus dem ersten Erkennungslauf 101. Anhand der im zweiten Erkennungslauf 106 ermittelten Emissionsvektoren 108 wird hierbei das Sprachsignal erkannt oder eine Liste mit den besten Ergebnissen der Spracherkennung ausgegeben.

Eine Reduzierung des Speicher- und Rechenzeitbedarfs wird hierbei im ersten und im zweiten Erkennungsschritt durch ein reduziertes Vokabular und eine reduzierte Abtastung von Abtastwerten, Merkmalsvektoren und Emissionsvektoren erzielt. Im Folgenden werden exemplarisch einige mögliche Ausführungsbeispiele zur Reduzierung des Erkennervokabulars und der Abtastung von ermittelten Sprachsignalinformationen angegeben.

Eine Möglichkeit zur Reduzierung von Zustandsfolgen von Einträgen des Erkennervokabulars ist das Auslassen einzelner Phonemsegmente aus einer Phonemsequenz eines Vokabulareintrages. Der Vokabulareintrag "Baum" beispielsweise schreibt sich in phonetischer Schreibweise
<b aU M>.

Wird dieser Vokabulareintrag in einer Triphonemfolge modelliert, ergibt sich die Phonemsequenz:
wa_b_ b _b_aU b_aU_ aU _aU_M aU_M_ M _M_we

Zieht man zur reduzierten Modellierung dieser Phonemsequenz lediglich die mittleren Phonemsegmente heran erhält man die reduzierter Phonemsequenz:
b aU M

Die Anzahl der Phonemsegmente wurde in diesem Beispiel um einen Faktor 3 verringert. Eine weitere Möglichkeit zur Reduzierung von Zustandsfolgen von Einträgen des Erkennervokabulars ist das Zusammenfassen von Phonemsegmenten. Der erste Vokabulareintrag ist beispielsweise "Apfel" und der zweite Vokabulareintrag "Amsel". In phonetischer Schreibweise liest sich der erste Vokabulareintrag <a p f @ 1> und der zweite Vokabulareintrag <a m z @ 1>.

Werden nun die Phonemsegmente "z" und "f" zu "(z,f)" und die Phonemsegmente "p" und "m" zu "(p,m)" zusammengefasst, ergeben sich für die beiden Vokabulareinträge die folgenden Phonemsequenzen:
<a (p,m) (z,f) @ 1>
und
<a (p,m) (z,f) @ 1>

Folglich ergeben sich zwei identische Phonemfolgen für die beiden Vokabulareinträge, weshalb sie nur einmal abgespeichert werden müssen.

Eine weitere Möglichkeit zur Reduzierung von Zustandsfolgen von Einträgen des Erkennervokabulars ist das Zusammenfassen von Zustandsübergängen aus einen Hidden-Markov-Modell. Der erste Vokabulareintrag ist beispielsweise das Wort "aus" mit der phonetischen Schreibweise <aU s>. Die Darstellung der zugehörigen Triphonemsequenz liest sich folgendermaßen:
<wa_aU_ aU _aU_s aU_s_ s _s_we>

Der zweite Vokabulareintrag ist das Wort "auf" mit der phonetischen Schreibweise <aU f>. Die Darstellung als Triphonemsequenz liest sich folgendermaßen:
<wa_aU_ aU _aU_f aU_f_ f _f_we>

Fasst man nun die Zustandsübergänge von _aU_f und _aU_s zu _aU_(s,f) (rechter Kontext von aU), sowie die Zustandsübergänge aU_f_ und aU_s_ zu
aU_(s,f)_ (linker Kontext von s,f) zusammen, reduziert sich die Anzahl der Zustände im Erkennervokabular von 10 auf 8. Je größer das Vokabular, um so größer wird auch die Einsparung an Speicherplatz ausfallen, da mehr gleiche Teilphonemsequenzen existieren.

Figur 2 zeigt in einer schematischen Darstellung ein Ausführungsbeispiel zur Reduzierung der Abtastung von Merkmalsvektoren. Ein Sprachsignal 201 wird in regelmäßigen Abständen von 15 ms abgetastet, was einer Abtastfrequenz von 1/15 ms entspricht. Zu jedem Abtastwert wird ein Merkmalsvektor 202 extrahiert. Für die Spracherkennung wird jedoch nur alle 45 ms ein Merkmalsvektor ausgelesen, was eine Abtastfrequenz von 1/45 ms entspricht. Da in diesem Beispiel nur jeder dritte Merkmalsvektor für die Berechnung im ersten Erkennungsschritt herangezogen wird, reduziert sich die Rechenzeit für den ersten Erkennungsschritt auf ein Drittel.

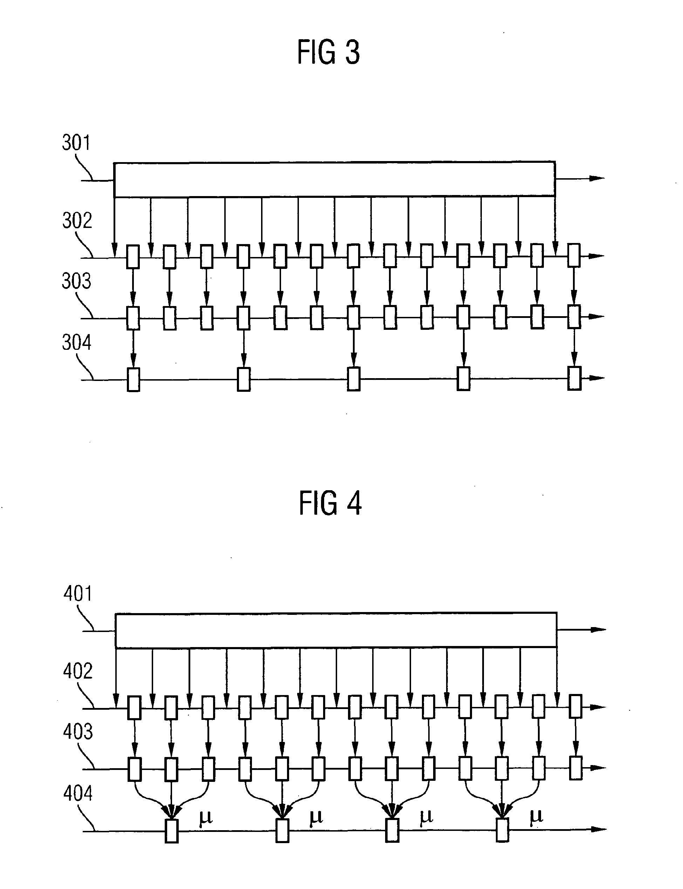

Figur 3 zeigt in einer schematischen Darstellung ein Ausführungsbeispiel zur Reduzierung der Abtastung der Emissionsvektoren. Ein Sprachsignal 301 wird in regelmäßigen Abständen von 15 ms abgetastet, was wiederum einer Abtastfrequenz von 1/15 ms entspricht. Zu jedem Abtastwert wird ein Merkmalsvektor extrahiert 302. Anschließend wird aus jedem Merkmalsvektor ein Emissionsvektor ermittelt 303. Für die Spracherkennung im ersten Erkennungsschritt wird jedoch nur alle 45 ms ein Emissionsvektor ausgelesen, was einer Abtastfrequenz von 1/45 ms entspricht. Da somit nur jeder dritte Emissionsvektor für den ersten Erkennungsschritt herangezogen wird, kann die Rechenzeit für die Suche im ersten Erkennungsschritt auf ein Drittel reduziert werden. Es liegt im Ermessen eines Fachmannes die reduzierte Abtastung nur für den ersten oder nur für den zweiten oder für den ersten und den zweiten Erkennungsschritt anzuwenden. Auch der Reduzierungsfaktor kann für beide Erkennungsschritte gleich oder unterschiedlich sein.

Figur 4 zeigt in einer schematischen Darstellung ein Ausführungsbeispiel zur Reduzierung der Abtastung von Emissionsvektoren. Ein Sprachsignal 401 wird in regelmäßigen Abschnitten von 15 ms abgetastet, was einer Abtastfrequenz von 1/15 ms entspricht. Zu jedem Abtastwert wird ein Merkmalsvektor extrahiert 402. Im nächsten Schritt wird zu jedem Merkmalsvektor ein Emissionsvektor ermittelt 403. Für den ersten Erkennungsschritt wird ein Mittelwert aus 3 benachbarten Emissionsvektoren verwendet, während für den zweiten Erkennungsschritt die bereits ermittelten Emissionsvektoren 403 für eine genauere Spracherkennung herangezogen werden.

Die beschriebenen Verfahren ermöglichen sowohl eine Verringerung des Speicherbedarfs durch ein reduziertes Vokabular, als auch die Verringerung der nötigen Rechenzeit durch eine nur teilweise Berechnung der Sprachsignalinformationen.

Sowohl die Verfahren zur Reduzierung des Vokabulars als auch die Verfahren zur Reduzierung der Abtastung können kombiniert oder getrennt angewendet werden. Gegebenenfalls müssen hierzu Änderungen an den Übergangsstrafen im Vokabular vorgenommen werden. Werden beide Verfahren kombiniert angewendet, empfiehlt es sich, sowohl die Zustandsfolgen als auch die Sprachsignalinformationen um den gleichen Faktor zu reduzieren. Für den Faktor 3 ergibt sich daraus beispielsweise insgesamt eine Rechenzeitersparnis um den Faktor 9 für den Erkennungsprozess, wenn nur jeder dritte Vektor mit einem um den Faktor 3 reduzierten Vokabular berechnet wird. Der zweite Erkennungsschritt ist bei dieser Berechnung nicht berücksichtigt. Werden für den ersten und zweiten Erkennungsschritt dasselbe Hidden-Markov-Modell verwendet, können die kompletten Merkmalsvektoren und Emissionsvektoren schon während des ersten Erkennungslaufes berechnet werden und im zweiten Erkennungsschritt wieder verwendet werden. Eine doppelte Berechnung der Emissionsvektoren kann damit vermindert werden, so dass für den zweiten Erkennungsschritt nur noch die Suche auf einem kleinen Vokabular durchgeführt werden muss.

## Patentansprüche

1. Verfahren zur Erkennung eines Sprachsignals,
bei dem
- in einem ersten Erkennungsschritt aus einem vorgebbaren Vokabular ähnliche Vokabulareinträge zu dem Sprachsignal ermittelt werden,
- in einem zweiten Erkennungsschritt aus den ähnlichen Vokabulareinträgen das Sprachsignal ermittelt wird,
**dadurch gekennzeichnet, dass**
- eine Abtastung von ermittelten Sprachsignalinformationen im ersten und/oder zweiten Erkennungsschritt reduziert wird,
- und/oder Zustandsfolgen von Einträgen des vorgebbaren Vokabulars reduziert werden.

2. Verfahren nach Anspruch 1,
wobei zur Ermittlung von ähnlichen Vokabulareinträgen beziehungsweise des Sprachsignals im ersten und zweiten Erkennungsschritt
- durch eine Abtastung aus einem Zeitsignal des Sprachsignals Abtastwerte ermittelt werden,
- durch eine Merkmalsextraktion aus den Abtastwerten Merkmalsvektoren ermittelt werden,
- durch eine Abstandsberechnung von Merkmalsvektoren und Referenzvektoren Emissionsvektoren ermittelt werden,
- die ermittelten Sprachsignalinformationen die Abtastwerte und/oder die Merkmalsvektoren und/oder die Emissionvektoren umfassen.

3. Verfahren nach Anspruch 1 und 2,
wobei zur Reduzierung der Abtastung der ermittelten Sprachsignalinformationen einzelne Abtastwerte und/oder Merkmalsvektoren und/oder Emissionsvektoren jeweils zusammengefasst oder ausgelassen werden.

4. Verfahren nach Anspruch 1 bis 3,
wobei zur Reduzierung der Abtastung der ermittelten Sprachsignalinformationen ein Abtastwert und/oder ein Merkmalsvektor und/oder ein Emissionsvektor nur herangezogen wird, wenn ein vorgebbarer Abstand zu einem Vorgängerwert/-vektor ermittelt wird.

5. Verfahren nach Anspruch 1 und 2,
wobei zur Reduzierung einer Anzahl der Abtastwerte eine Abtastfrequenz verkleinert wird.

6. Verfahren nach Anspruch 1,
wobei zur Reduzierung der Zustandsfolgen von Einträgen des vorgebbaren Vokabulars einzelne Phonemsegmente aus einer Phonemsequenz zusammengefasst oder ausgelassen werden.

7. Verfahren nach Anspruch 1,
wobei zur Reduzierung der Zustandsfolgen von Einträgen des vorgebbaren Vokabulars einzelne Zustandsübergänge aus einem Hidden-Markov-Modell zusammengefasst oder ausgelassen werden.

8. Verfahren nach Anspruch 1,
wobei die Reduzierung der Abtastung von ermittelten Sprachsignalinformationen und der Zustandsfolgen von Einträgen des vorgebbaren Vokabulars um den gleichen Faktor erfolgt.

9. Datenverarbeitungsvorrichtung,
aufweisend eine Spracherkennungseinheit, welche zur Erkennung eines Sprachsignals,
- in einem ersten Erkennungsschritt aus einem vorgebbaren Vokabular ähnliche Vokabulareinträge zu dem Sprachsignal ermittelt,
- in einem zweiten Erkennungsschritt aus den ähnlichen Vokabulareinträgen das Sprachsignal ermittelt, wobei
- eine Abtastung von ermittelten Sprachsignalinformationen im ersten und/oder zweiten Erkennungsschritt reduziert wird,
- und/oder Zustandsfolgen von Einträgen des vorgebbaren Vokabulars reduziert werden.

## Claims

1. Method for recognition of a speech signal where
- in a first step of recognition, vocabulary entries similar to the speech signal are identified in a settable vocabulary,
- in a second step of recognition, the corresponding speech signal is selected from the similar vocabulary entries,
**characterised in that**
- sampling of determined speech signal information is reduced in the first and/or second step of recognition,
- and/or feature sequences of vocabulary entries of the settable vocabulary are reduced.

2. Method according to claim 1,
where in order to identify similar vocabulary entries of the speech signal in the first and second step of recognition respectively
- sample values are identified by a sampling of a time signal of the speech signal,
- feature vectors are identified by a feature extraction from the sample values,
- emission vectors are identified by a distance calculation of feature vectors and reference vectors,
- the speech signal information identified includes the sample values and / or the feature vectors and/or the emission vectors.

3. Method according to claim 1 and 2,
where individual sample values and/or feature vectors and/or emission vectors are each combined or omitted to reduce the sampling of the speech signal information identified.

4. Method according to claims 1 to 3,
where a sample value and/or a feature vector and/or an emission vector is only used to reduce the sampling of the speech signal information identified, if a specifiable distance to a previous value/vector is identified.

5. Method according to claims 1 and 2,
where a sampling frequency is decreased to reduce a number of sample values.

6. Method according to claim 1,
where individual phoneme segments of a phoneme sequence are combined or omitted to reduce the feature sequences of entries of the settable vocabulary.

7. Method according to claim 1,
where individual feature transitions from a hidden Markov model are combined or omitted to reduce the feature sequences of entries of the settable vocabulary.

8. Method according to claim 1,
where the sampling of the speech signal information identified is reduced by the same factor as the feature sequences of entries of the settable vocabulary.

9. Data processing equipment,
having a speech recognition unit, which unit, in order to identify a speech signal,
- in a first step of recognition, identifies vocabulary entries similar to the speech signal in a settable vocabulary,
- in a second step of recognition, selects the corresponding speech signal from the similar vocabulary entries,
- sampling of determined speech signal information is reduced in the first and/or second step of recognition,
- and/or feature sequences of vocabulary entries of the settable vocabulary are reduced.

## Revendications

1. Procédé de reconnaissance d'un signal vocal, dans lequel
- au cours d'une première étape de reconnaissance, à partir d'un vocabulaire prédéfinissable, des entrées de vocabulaire similaires au signal vocal sont calculées,
- au cours d'une seconde étape de reconnaissance, le signal vocal correspondent est calculé à partir des entrées de vocabulaire similaires,
**caractérisé en ce**
- **qu'**un échantillonnage d'informations de signal vocal calculées est réduit au cours de la première et/ou de la seconde étape,
- et/ou des séquences d'états d'entrées du vocabulaire prédéfinissable sont réduites.

2. Procédé selon la revendication 1,
dans lequel pour calculer des entrées de vocabulaire similaires, respectivement du signal vocal au cours de la première et de la seconde étape de reconnaissance
- des valeurs d'échantillonnage sont calculées par un échantillonnage d'un signal temporel du signal vocal,
- des vecteurs de caractéristique sont calculés par une extraction de caractéristiques des valeurs d'échantillonnage,
- des vecteurs d'émission sont calculés par un calcul de distance de vecteurs de caractéristique et de vecteurs de référence,
- les informations de signal vocal calculées comprennent les valeurs d'échantillonnage et/ou les vecteurs de caractéristique et/ou les vecteurs d'émission.

3. Procédé selon la revendication 1 et 2,
dans lequel pour réduire l'échantillonnage des informations de signal vocal calculées, des valeurs d'échantillonnage et/ou des vecteurs de caractéristique et/ou des vecteurs d'émission individuels sont respectivement regroupés ou supprimés.

4. Procédé selon les revendications 1 à 3,
dans lequel pour réduire l'échantillonnage des informations de signal vocal calculées, une valeur d'échantillonnage et/ou un vecteur de caractéristique et/ou un vecteur d'émission n'est utilisé que lorsqu'une distance prédéfinissable à une valeur/un vecteur précédent(e) est calculée.

5. Procédé selon la revendication 1 et 2,
dans lequel une fréquence d'échantillonnage est réduite pour réduire un nombre des valeurs d'échantillonnage.

6. Procédé selon la revendication 1,
dans lequel pour réduire les séquences d'états d'entrées du vocabulaire prédéfinissable, des segments de phonèmes individuels d'une séquence de phonèmes sont regroupés ou supprimés.

7. Procédé selon la revendication 1,
dans lequel pour réduire les séquences d'états d'entrées du vocabulaire prédéfinissable, des transitions d'états individuelles d'un modèle de Hidden-Markov sont regroupées ou supprimées.

8. Procédé selon la revendication 1,
dans lequel la réduction de l'échantillonnage d'informations de signal vocal calculées et des séquences d'états d'entrées du vocabulaire prédéfinissable est effectuée avec le même facteur.

9. Dispositif de traitement des données,
présentant une unité de reconnaissance vocale, laquelle, pour reconnaître un signal vocal,
- calcule à partir d'un vocabulaire prédéfinissable, des entrées de vocabulaire similaires au signal vocal au cours d'une première étape de reconnaissance,
- calcule le signal vocal correspondent à partir des entrées de vocabulaire similaires au cours d'une seconde étape de reconnaissance, sachant
- qu'un échantillonnage d'informations de signal vocal calculées est réduit au cours de la première et/ou de la seconde étape de reconnaissance,
- et/ou des séquences d'états d'entrées du vocabulaire prédéfinissable sont réduites.
